# EUROPÄISCHE PATENTANMELDUNG

(11) **EP 0 663 435 A1**
(43) Veröffentlichungstag der Anmeldung: **19.07.1995**
(21) Anmeldenummer: 94114402.4
(22) Anmeldetag: 14.09.1994
(51) Int. Cl.: C10J 3/46

(54) **Verfahren zur Aufarbeitung von Kommunalem Kunststoffabfall**

(30) Priorität: 27.10.1993 DE 4336580
(71) Anmelder: Krupp Koppers GmbH, D-45143 Essen (DE)
(72) Erfinder: Linke, Adolf, D-45239 Essen (DE); Pohl, Werner, D-45276 Essen (DE); Schmid, Karl, Dr., D-45133 Essen (DE); Wetzel, Rolf, Dr., D-45279 Heiligenhaus (DE)

(57) **Zusammenfassung**

Bei diesem Verfahren wird der von Metallteilen befreite, vorgereinigte und zerkleinerte Kunststoffabfall in einem Schneckenextruder unter HCl-Abspaltung verdichtet und erhitzt. Die Erhitzung wird solange fortgesetzt, bis eine weitgehende HCl-Abtrennung erfolgt ist und die Viskosität der Kunststoffschmelze bis auf < 300 cSt abgesunken ist. Anschließend wird die Kunststoffschmelze in einem Vergasungsreaktor in einer Flammenreaktion unter Sauerstoffzugabe umgesetzt. Das dabei erzeugte Gas wird gekühlt, entstaubt und entschwefelt. Im Anschluß an die Gasbehandlung kann dieses Gas als Synthesegas in der chemischen Industrie oder zur Energiegewinnung bei der Erzeugung von Strom oder Fernwärme genutzt werden.

## Beschreibung

Die Erfindung betrifft ein Verfahren zur Aufarbeitung von kommunalem Kunststoffabfall durch Vergasung.

In der Bundesrepublik Deutschland werden pro Jahr ca. 3,5 Millionen Tonnen Kunststoff erzeugt, von denen ein großer Teil für Verpackungszwecke genutzt wird und nach Gebrauch in den Müll gelangt. Vor der Einführung des sogenannten dualen Systems war es üblich, daß dieser Kunststoffabfall zusammen mit dem übrigen in den Kommunen anfallenden Müll entweder auf Deponien abgelagert oder in Müllverbrennungsanlagen verbrannt wurde. Mit der Einführung des dualen Systems sind Bemühungen in Gang gesetzt worden, die Kunststoffabfälle getrennt von den übrigen Bestandteilen des Mülls zu sammeln und in geeigneter Weise einer Wioderverwertung bzw. anderweitigen Nutzung zuzuführen. Hierbei ist davon auszugehen, daß die Kunststoffabfälle im wesentlichen aus Kohlenstoff und Wasserstoff aufgebaut sind und in etwa denselben Heizwert wie schweres Heizöl besitzen und pro Jahr maximal 2,5 Millionen Tonnen Kunststoffabfälle in der Bundessrepublik gesammelt werden können.

Der direkten Wiederverwertung sind jedoch enge Grenzen gesetzt, da die eingesammelten Kunststoffabfälle insgesamt ein Gemisch aus verschiedensten Verbindungen darstellen, das nicht hinreichend in seine einzelnen polymeren Bestandteile aufgetrennt werden kann. Die Kunststoffe müssen jedoch für den jeweiligen Einsatzzweck, wie z.B. in der Verpackungsindustrie, der Fahrzeugindustrie oder der Bauindustrie, genau definierte Eigenschaften besitzen, die nur mit sortenreinen Kunststoffen erreicht werden können. Außerdem können wiederverwendete Kunststoffe die Qualitätsanforderungen meist deshalb nicht erfüllen, weil mit der Wiederholung eines bereits einmal vollzogenen Verarbeitungsschrittes immer eine Verminderung der qualitätsbestimmenden Eigenschaften einhergeht.

Es liegt deshalb nahe, den Energiegehalt der Kunststoffabfälle durch Verbrennung zur Wärmeerzeugung zu nutzen, wie dies beispielsweise in Müllverbrennungsanlagen geschieht. Dem steht jedoch entgegen, daß die Kunststoffabfälle stets halogenhaltige Substanzen, wie beispielsweise PVC, enthalten, die bei der Verbrennung zur Bildung von Salzsäure sowie von mehr oder weniger großen Mengen polyzyklischer Halogenverbindungen (Dioxine/Furane) führen, die mit den Rauchgasen in die Atmosphäre gelangen können. Eine Entfernung dieser Schadstoffe aus dem Rauchgas ist aber nur mit großem Aufwand möglich. Bei Betriebsstörungen in der Rauchgaswäsche besteht dabei die Gefahr, daß diese Schadstoffe zumindest über einen begrenzten Zeitraum in die Atmosphäre gelangen können.

Der Erfindung liegt deshalb die Aufgabe zugrunde, ein Verfahren zur Aufarbeitung von kommunalem Kunststoffabfall zu schaffen, das die vorstehend beschriebenen Nachteile vermeidet und die Nutzung des Kunststoffabfalles in einer die Umwelt schonenden Art und Weise gestattet.

Diese Aufgabe wird dadurch gelöst, daß der Kunststoffabfall einer Vergasung unterworfen wird, bei der erfindungsgemäß die Verfahrensschritte a) bis h) des Hauptanspruches zur Anwendung gelangen.

Die Erfindung geht dabei von der Erkenntnis aus, daß eine stoffliche Wiederverwertung der elementaren Bausteine der Kunststoffe, nämlich Kohlenstoff und Wasserstoff, ohne die vorstehend beschriebenen Nachteile am besten über eine Umsetzung dieser Bausteine zu Synthesegas erfolgen kann. Synthesegas, dessen Kohlenmonoxid- und Wasserstoffgehalt durch entsprechende Gasbehandlung dem jeweiligen Anwendungszweck angepaßt werde kann, wird in der chemischen Industrie im großen Umfang benötigt. Wichtige Beispiele hierfür sind die Fischer-Tropsch-Synthese, die Methanol- und Ammoniaksynthese sowie die Bereitstellung von Wasserstoff für Hydrierprozesse.

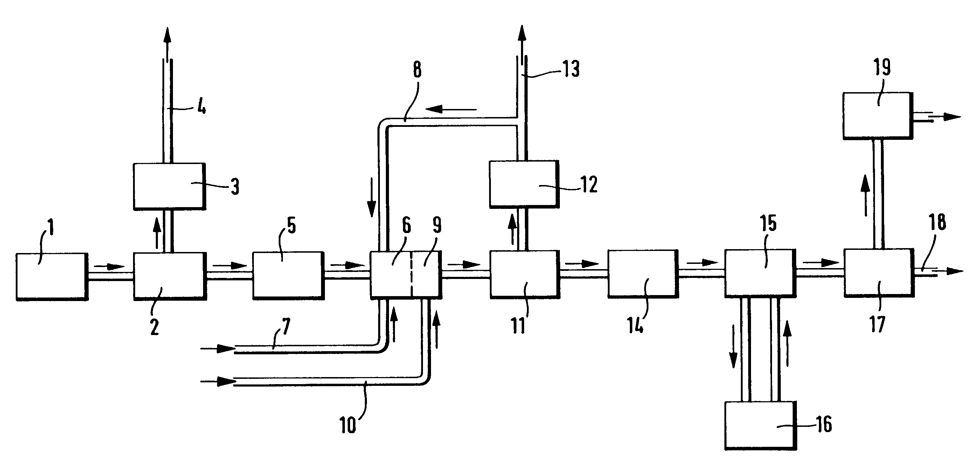

Weitere Einzelheiten des erfindungsgemäßen Verfahrens ergeben sich aus den vorliegenden Unteransprüchen und sollen nachfolgend mittels des in der Abbildung dargestellten Blockfließbildes an einem Ausführungsbeispiel erläutert werden.

Der zur Verarbeitung gelangende, in den Haushalten im wesentlichen als Verpackungskunststoff anfallende Kunststoffabfall hat in etwa folgende Zusammensetzung:

| | |
|---|---|
| Polyolefine | 60 - 70 % |
| Polystyrol | 20 - 25 % |
| PET | 5 % |
| PVC | 5 % |

Vor seiner Aufarbeitung wird der Kunststoffabfall zunächst einer Magnetscheidung zwecks Entfernung metallischer Bestandteile sowie einer Vorzerkleinerung und einer Wäsche mit anschließender Trocknung unterworfen und wird dann in den Sammelbehälter 1 überführt.

Aus dem Sammelbehälter 1 gelangen dabei 6450 kg Kunststoffabfall pro Stunde in den Schneckenextruder 2. Hier wird der bereits vorgereinigte und bis auf eine Stückgröße von ca. 20 mm vorzerkleinerte Kunststoffabfall infolge der hohen Scherwirkung des Extruders komprimiert, aufgeschmolzen und bis auf ca. 300°C erhitzt. Bei Temperaturen oberhalb 230°C wird aus den PVC-Anteilen des Kunststoffgemenges Chlorwasserstoff freigesetzt, wobei das aus verdichtetem und erhitztem Kunststoff entweichende HCl-haltige Gas in den Absorber 3 eingeleitet wird. Im Absorber 3, der aus einem HCl-resistenten Material, wie zum Beispiel Graphit oder Glas, besteht, wird das HCl-haltige Gas im Gegenstrom mit Wasser gewaschen und dadurch zu 30 %-iger Salzsäure umgesetzt, so daß 667 kg/Stunde 30 %-ige Salzsäure über die Leitung 4 abgezogen werden können. Die Verfahrensbedingungen werden dabei im Schneckenextruder 2 so eingestellt, daß der Kunststoffabfall bis auf einen Druck von 40 - 80 bar, vorzugsweise 50 bar, verdichtet und die Temperatur im Bereich zwischen 230 und 300°C gehalten wird. Der Schneckenextruder 2 ist so ausgelegt, daß die Aufenthaltszeit des Kunststoffabfalles im Temperaturbereich > 230° C aussreicht, um diesen HCl-Gehalt bis auf weniger als 3000 mg/kg Kunststoff abzusenken. Im vorliegenden Ausführungsbeispiel konnte der HCl-Gehalt des Kunststoffabfalles von 30 g pro kg Kunststoff sogar bis auf 200 mg/kg abgesenkt werden.

Die im wesentlichen von ihrem HCl-Gehalt befreite Kunststoffschmelze wird aus dem Schneckenextruder 2 abgezogen und zwecks Viskositätserniedrigung einer weiteren Erhitzung unterworfen. Die Erhitzung erfolgt im Zwischenbehälter 5, in dem die Schmelze bis auf eine Temperatur zwischen 400 und 500°C erhitzt wird, wobei diese Temperatur solange gehalten wird, bis die Viskosität der Schmelze bis auf < 300 cSt, vorzugsweise bis auf < 50 cSt, abgesunken ist. Durch diese Viskositätserniedrigung wird sichergestellt, daß die Schmelze anschließend problemlos in den Vergasungsbrennern des Vergasungsreaktors 6 versprüht werden kann. Die Kunststoffschmelze wird dabei den Vergasungsbrennern über ein Druckhalteventil zugeführt und beim Austritt aus dem Brenner auf Vergasungsdruck entspannt, wobei die Kunststoffschmelze mittels Sauerstoffzufuhr versprüht wird. Im Vergasungsreaktor 6 wird die Kunststoffschmelze mit Sauerstoff bei einem Druck von 4 bar vergast. Die Vergasung erfolgt dabei bei Temperaturen in der Flamme von ca. 2000°C. Die mittlere Temperatur im Vergasungsraum beträgt ca. 1600°C. Die Sauerstoffzugabe wird so bemessen, daß der im Kunststoff enthaltene Kohlenstoff im wesentlichen nur zu CO umgesetzt wird. Höhermolekulare toxische Verbindungen, wie z.B. Polychlorbenzole, werden bei den angewandten Reaktionstemperaturen mit Sicherheit zerstört. Um einen hohen Kohlenstoffumsatz bei der Vergasung zu gewährleisten, ist es allerdings zweckmäßig, die Vergasungsbedingungen so einzustellen, daß im erzeugten Rohgas ein CO₂-Gehalt von 1 bis 5 Vol.-%, vorzugsweise 2 Vol.-%, vorhanden ist. Gegebenenfalls kann neben Sauerstoff auch Wasserdampf in den Vergasungsreaktor 6 eingeleitet werden, wobei das Gewichts-Verhältnis H₂S/O₂ ≦ 0,3 sein soll. Der erforderliche Sauerstoff wird über die Leitung 7 und der Wasserdampf über die Leitung 8 in den Vergasungsreaktor eingeleitet. Beim Vergasungsreaktor 6 kann es sich um einen Reaktor konventioneller Bauart, beispielsweise vom Typ des Koppers-Totzek-Reaktors, handeln, der mit mindestens zwei einander gegenüberstehenden Vergasungsbrennern ausgerüstet ist.

Aus dem Vergasungsreaktor 6 gelangt das erzeugte Rohgas mit einer Temperatur von 1300 bis 1600°C in die Gasquench 9, in der das Gas durch Eindüsung von Wasser und/oder rückgeführtem Gas, die über die Leitung 10 zugeführt werden können, bis auf eine Temperatur von 700 bis 900°C direkt gekühlt wird. Die Gasquench 9 schließt sich dabei unmittelbar an den Vergasungsreaktor 6 an und kann mit diesem eine bauliche Einheit bilden. Im vorliegenden Ausführungsbeispiel fallen hinter der Gasquench 9 pro Stunde 16032 m³n Rohgas mit folgender Zusammensetzung (trocken) an:

| | |
|---|---|
| CO₂ | 4,52 Vol.-% |
| CO | 55,94 Vol.-% |
| H₂ | 39,25 Vol.-% |
| N₂ | 0,15 Vol.-% |
| H₂S | 0,13 Vol.-% |
| COS | 0,0082 |
| CH₄ | 0,0049 Vol.-% |

Im Anschluß an die Gasquench 9 wird die Rohgastemperatur durch indirekte Kühlung unter Dampferzeugung bis auf einen Wert von 220 bis 300°C weiter abgesenkt. Diese Abkühlung kann beispielsweise in einem Rauchrohrkessel 11 erfolgen, der mit einer Dampftrommel 12 verbunden ist. Der auf diese Weise erzeugte Dampf wird über die Leitung 13 abgezogen, von der die Leitung 8 für die Dampfzufuhr in den Vergasungsreaktor 6 abzweigt. Im vorliegenden Ausführungsbeispiel kann über die Leitung 13 Sattdampf mit einem Druck von 37 bar in einer Menge von 6787 kg/h abgezogen werden.

Das gekühlte Rohgas wird anschließend durch den Kerzenfilter 14 geleitet und dabei einer Trockenentstaubung bis auf einen Wert von < 20 mg Staub/Nm³ Gas, vorzugsweise < 3 mg Staub/Nm³ Gas unterworfen. Im Anschluß an die Trockenentstaubung folgt eine Wasserwäsche des Gases, die in einem Venturiwascher 15 durchgeführt werden kann und durch die neben dem Reststaub vor allem Rest-HCl und NH₃ aus dem Gas ausgewaschen werden. Das hierfür erforderliche Waschwasser wird in an sich bekannter Weise über einen Stripper 16 im Kreislauf geführt, wobei im Stripper 16 die vom Waschwasser aufgenommenen Gasbestandteile abgetrieben werden können. Zur Neutralisation der im Waschwasser vorhandenen Sauergase kann gegebenenfalls ein Natronlaugezusatz in den Waschwasserkreislauf erfolgen. Ferner kann zur Einstellung der Wasserbilanz Gaskondensat aus der Entschwefelung in den Waschwasserkreislauf des Venturi-Waschers 15 eingespeist werden. Im Anschluß an die Wasserwäsche gelangt das Gas nach Wasserabscheidung in die Entschwefelung 17, die mit Hilfe bekannter Verfahren, beispielsweise durch Wäsche mit einer Methyldiethanolamin-Lösung (MDEA-Wäsche) mit vorgeschalteter COS-Hydrolyse durchgeführt werden kann. Im Anschluß an die Entschwefelung kann das erhaltene Reingas seiner weiteren Verwertung bzw. Verarbeitung zugeführt werden. Im vorliegenden Ausführungsbeispiel wurden dabei 17378 Nm³/h Reingas mit folgender Zusammensetzung

| | |
|---|---|
| CO₂ | 4,29 Vol.-% |
| CO | 51,50 Vol.-% |
| H₂ | 36,11 Vol.-% |
| N₂ | 8,09 Vol.-% |

über die Leitung 18 abgezogen. Sofern die Erzeugung eines reinen Synthesegases ohne Stickstoffgehalt gewünscht wird, ist es erforderlich, für die Vergasung reinen Sauerstoff mit > 99,8 % O₂ einzusetzen und die Spülung des Kerzenfilters (Abreinigung) mit Produktgas durchzuführen. Der bei der Entschwefelung aus dem Gas ausgewasche Schwefelwasserstoff kann in der Claus-Anlage 19 in an sich bekannter Weise zu Elementarschwefel aufgearbeitet werden. Dadurch fallen beim Ausführungsbeispiel zusätzlich 31 kg/h Elementarschwefel an. In der Claus-Anlage 19 können auch die im Stripper 16 abgetriebenen Gasbestandteile eingeleitet werden.

Im vorliegenden Blockfließbild sind nur die zur Verfahrenserläuterung unbedingt erforderlichen Anlagenteile berücksichtigt. In der Praxis sind die Anlagenteile selbstverständlich mit allen notwendigen Nebeneinrichtungen ausgerüstet. Ein Vorteil des erfindungsgemäßen Verfahrens ist hierbei insbesondere darin zu sehen, daß es sich aus Verfahrenseinheiten und Komponenten zusammensetzt, die bereits seit längerem bekannt und bei vergleichbaren Anwendungsfällen bereits erfolgreich eingesetzt worden sind. Deshalb kann auf diese Erfahrungen bei der Errichtung einer großtechnischen Anlage zur Durchführung des erfindungsgemäßen Verfahrens zurückgegriffen werden, was deren Bauzeit beträchtlich verkürzt. Das mit dem erfindungsgemäßen Verfahren erzeugte Gas hat Synthesegasreinheit und kann entweder als Synthesegas in der chemischen Industrie oder zur Energiegewinnung bei der Erzeugung von Strom oder Fernwärme genutzt werden. Eine Umweltbelastung findet beim Einsatz dieses Gases nicht statt.

### POSITIONS ZAHLEN LISTE

- 1: Sammelbehälter
- 2: Schneckenextruder
- 3: Absorber
- 4: Leitung
- 5: Zwischenbehälter
- 6: Vergasungsreaktor
- 7: Leitung
- 8: Leitung
- 9: Gasquench
- 10: Leitung
- 11: Rauchrohrkessel
- 12: Dampftrommel
- 13: Leitung
- 14: Kerzenfilter
- 15: Venturiwascher
- 16: Stripper
- 17: Entschwefelung
- 18: Leitung
- 19: Claus- Analge

## Patentansprüche

1. Verfahren zur Aufarbeitung von kommunalem Kunststoffabfall durch Vergasung, gekennzeichnet durch folgende Verfahrensschritte:
a) Der von Metallteilen befreite, vorgereinigte und bis auf eine Stückgröße von ca. 20 mm zerkleinerte Kunststoff wird in einem Schneckenextruder unter HCl-Abspaltung bis auf einen Druck von 40 bis 80 bar verdichtet und bis auf eine Temperatur zwischen 230 und 300°C erhitzt,
b) die aus dem verdichteten und erhitzten Kunststoff entweichenden HCl-haltigen Gase werden aus dem Schneckenextruder in einen gegen Salzsäure unempfindlichen Absorber abgeleitet, in dem sie im Gegenstrom mit Wasser unter Erzeugung von Salzsäure behandelt werden,
c) der verdichtete und erhitzte Kunststoffabfall wird, nachdem sein HCl-Gehalt auf weniger als 3000 mg/kg Kunststoff abgesunken ist, aus dem Schneckenextruder abgezogen und in einem Zwischenbehälter bis auf eine Temperatur von 400 bis 500°C weiter erhitzt, wobei die Temperatur so eingestellt wird, daß die Viskosität der Kunststoffschmelze auf < 300 cSt abgesenkt wird,
d) die so vorbehandelte Kunststoffschmelze wird in einen Vergasungsreaktor eingeleitet, in dem sie bei einem Druck von 4 bar unter Sauerstoffzugabe in einer Flammenreaktion umgesetzt wird, wobei die Sauerstoffzugabe so bemessen wird, daß der im Kunststoff enthaltene Kohlenstoff im wesentlichen nur zu CO umgesetzt wird und wobei die mittlere Temperatur im Vergasungsraum bei ca. 1600°C gehalten wird,
e) das erzeugte Rohgas wird aus dem Vergasungsreaktor mit einer Temperatur von 1300 bis 1600°C abgezogen und zunächst durch Wassereindüsung und/oder Gasquench bis auf eine Temperatur von 700 bis 900°C sowie daran anschließend in einem Wärmetauscher unter Dampferzeugung bis auf eine Temperatur von 220 bis 300°C gekühlt,
f) das gekühlte Gas wird einer Trockenentstaubung zugeführt, in der der Staubgehalt des Gases bis auf einen Wert von < 20 mg/Nm³ Gas abgesenkt wird,
g) anschließend werden der noch im Gas vorhandene Reststaubgehalt sowie vorhandene gasförmige Verunreinigungen durch eine Wasserwäsche entfernt, und
h) das entsprechend gereinigte Gas wird in an sich bekannter Weise einer Entschwefelung unterworfen.

2. Verfahren nach Anspruch 1, **dadurch gekennzeichnet**, daß die Viskosität der Kunststoffschmelze vor der Einleitung in den Vergasungsreaktor bis auf < 50 cSt herabgesetzt wird.

3. Verfahren nach den Ansprüchen 1 und 2, **dadurch gekennzeichnet**, daß in den Vergasungsreaktor neben Sauerstoff auch Wasserdampf eingeleitet wird, wobei das Gewichts-Verhältnis H₂O/O₂ ≦ 0,3 sein soll.

4. Verfahren nach den Ansprüchen 1 bis 3,**dadurch gekennzeichnet**, daß für die Salzsäuregewinnung gemäß Verfahrensstufe b) ein aus Graphit oder Glas bestehender Absorber verwendet wird.

5. Verfahren nach den Ansprüchen 1 bis 4, **dadurch gekennzeichnet**, daß die Trockenentstaubung des Gases mit Hilfe eines Kerzenfilters durchgeführt wird und der Staubgehalt des Gases dabei bis auf < 3 mg/Nm³ herabgesetzt wird.

6. Verfahren nach den Ansprüchen 1 bis 5, **dadurch gekennzeichnet**, daß die Wasserwäsche des Gases in einem Venturiwascher mit Waschwasserkreislaufführung über einen Stripper durchgeführt wird.

7. Verfahren nach den Ansprüchen 1 bis 6, **dadurch gekennzeichnet**, daß die Entschwefelung des Gases durch eine Wäsche mit einer Methyldiethanolamin-Lösung mit vorgeschalteter COS-Hydrolyse erfolgt.

8. Verfahren nach den Ansprüchen 1 bis 7, **dadurch gekennzeichnet**, daß der bei der Entschwefelung aus dem Gas abgetrennte Schwefelwasserstoff in einer Claus-Anlage zu Elementarschwefel weiterverarbeitet wird, wobei in die Claus-Anlage auch die im Stripper der Wasserwäsche abgetriebenen Gasbestandteile eingeleitet werden.
